# EUROPÄISCHE PATENTSCHRIFT

(11) **EP 2 328 783 B1**
(45) Veröffentlichungstag und Bekanntmachung des Hinweises auf die Patenterteilung: **06.11.2013**
(21) Anmeldenummer: 09781824.9
(22) Anmeldetag: 13.08.2009
(51) Int. Cl.: B60R 11/02, G06F 3/048, G06F 3/033

(54) **BEDIENELEMENT FÜR EINE ANZEIGEVORRICHTUNG IN EINEM TRANSPORTMITTEL**
OPERATOR CONTROL ELEMENT FOR A DISPLAY APPARATUS IN A TRANSPORTATION MEANS
ÉLÉMENT DE COMMANDE POUR DISPOSITIF D'AFFICHAGE DANS UN MOYEN DE TRANSPORT

(30) Priorität: 27.08.2008 DE 102008041625
(43) Veröffentlichungstag der Anmeldung: 08.06.2011
(73) Patentinhaber: Faurecia Innenraumsysteme GmbH, 76767 Hagenbach (DE)
(72) Erfinder: SEILLER, Julien, 76185 Karlsruhe (DE); ALLARD, Nicolas, F-16590 Brie (FR); HOTARY, James, Holland MI 49424 (US)
(74) Vertreter: Richardt Patentanwälte GbR
(86) Internationale Anmeldenummer: PCT/EP2009/060520
(87) Internationale Veröffentlichungsnummer: WO 2010/023110

(56) Entgegenhaltungen:
- EP-A2- 0 664 504
- EP-A2- 1 014 295
- EP-A2- 1 887 454
- WO-A2-2009/045671
- DE-U1- 20 111 157
- US-A1- 2003 201 984
- US-A1- 2006 181 515
- US-A1- 2007 198 141

## Beschreibung

Die Erfindung betrifft ein Bedienelement für eine Anzeigevorrichtung in einem Transportmittel, eine Mittelkonsole eines Kraftfahrzeugs, wie in Dokument EP-A2-1014295 offenbart, ein Verfahren zum Betrieb eines Bedienelements für eine Anzeigevorrichtung sowie ein Computerprogrammprodukt.

Transportmittel wie Kraftfahrzeuge, Schienenfahrzeuge, Motorräder, Flugzeuge oder Schiffe weisen in der Regel eine Vielzahl von Bedienelementen auf. Am Beispiel eines Kraftfahrzeugs seien hier Bedienelemente zur Fahrzeuginnenraum-Temperaturregulierung, Fahrzeugnavigation, Mobilfunk, Radio oder TV genannt. Allgemein wird eine Steuerung für solche Komponenten im Automobilbereich auch als "Infotainmentsystem" bezeichnet. Diese Infotainmentsysteme enthalten für das Fahren nicht notwendige Dienste. Verschiedene Infotainmentsysteme werden von Fahrzeugherstellern unter unterschiedlichen Namen vertrieben. Bezeichnungen sind beispielsweise iDrive (BMW), MMI (Audi) oder COMAND (Mercedes-Benz).

Um eine komfortable. Bedienung dieser Infotainmentsysteme zu ermöglichen, werden mittlerweile Bedienkonzepte eingesetzt, welche neben einer Bereitstellung eines Anzeigeelements im Sichtbereich eines Kraftfahrzeugführers eine weitere Be-dieneiriheit mit Tasten und Drehknöpfen im Bereich der Mittelkonsole umfassen. Ziel ist es hierbei, die Anzahl der Bedienknöpfe und Regler stark zu reduzieren, so dass aufgrund einer intelligenten Menüführung am Anzeigeelement ein Kraftfahrzeugführer in der Lage ist, eine Vielfalt von verschiedenen Funktionen des Kraftfahrzeugs zu steuern, ohne vom eigentlichen Fahrtgeschehen zu sehr abgelenkt zu sein.

Beispielsweise offenbart die KR 102 001 004 77 20 eine Vorrichtung, welche ein Bedienelement für eine Anzeigevorrichtung in einem Kraftfahrzeug umfasst, wobei das Bedienelement von der Anzeigevorrichtung räumlich getrennt ist und welches mittels einer Touchpad-Funktion gesteuert werden kann.

Die DE 10 2005 059 449 A1 offenbart ein Bediensystem zum Bedienen von Funktionen in einem Fahrzeug.

Die DE 100 39 432 C1 offenbart eine Bedieneinrichtung, insbesondere zur ablenkungsarmen Bedienung von Schaltern in einem Kraftfahrzeug mit einem Sensor zur Erfassung der Position eines durch eine Bedienperson manuell geführten Eingabeelements und einer im Blickfeld der Bedienperson angeordneten optischen Anzeigeeinheit zur Darstellung mindestens eines virtuellen Bedienelements.

Die DE 102 06 471 A1 offenbart ein ergonomisch anpassbares Bedienelement in einem Kraftfahrzeug, dessen Position in mindestens einem Freiheitsgrad veränderbar einstellbar ist.

Demgegenüber liegt der Erfindung die Aufgabe zugrunde, ein verbessertes Bedienelement für eine Anzeigevorrichtung in einem Transportmittel, eine verbesserte Mittelkonsole, ein verbessertes Verfahren zum Betrieb eines Bedienelements für eine Anzeigevorrichtung in einem Transportmittel sowie ein verbessertes Computerprogrammprodukt zur Durchführung des Verfahrens zum Betrieb eines Bedienelements für eine Anzeigevorrichtung in einem Transportmittel zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den äbhängigen Patentansprüchen angegeben.

Erfindungsgemäß wird ein Bedienelement für eine Anzeigevorrichtung in einem Transportmittel geschaffen, wobei das Bedienelement von der Anzeigevorrichtung räumlich getrennt ist, wobei das Bedienelement einen einzige berührungsempfindliche Koordinaten-Eingabevorrichtung aufweist, wobei auf der Koordinaten-Eingabevorrichtung mehrere Eingabeflächen ausgebildet sind, wobei die Eingabeflächen durch haptisch fühlbare Abtrennungen räumlich voneinander getrennt sind. Es können jedoch auch noch weitere Bedienelemente gegebenenfalls mit weiteren Koordinaten-Eingabevorrichtungen an die Anzeigevorrichtung angeschlossen sein.

Unter einer berührungsempfindlichen Koordinaten-Eingabevorrichtung wird im Folgenden jede Art von Touchpad oder Touchscreen verstanden, insbesondere kapazitive, resistive, Schallwellen-gesteuerte (SAW) oder optische Systeme.

Ferner wird im Folgenden unter einem "Transportmittel" jede Art von Verkehrsmittel. verstanden, wie beispielsweise Kraftfahrzeuge, Motorräder, Flugzeuge, Schiffe oder Schienenfahrzeuge. Beispielhafte Erläuterungen werden jedoch im Folgenden ohne Beschränkung der Allgemeinheit lediglich für Kraftfahrzeuge dargelegt.

Das erfindungsgemäße Bedienelement für eine Anzeigevorrichtung hat den Vorteil, dass ein Benutzer die Anzeigevorrichtung bedienen kann, ohne hierbei beispielsweise in einem Kraftfahrzeug seinen Blick von der Straße auf das Bedienelement richten zu müssen. Durch die Eingabeflächen, welche durch haptisch fühlbare Abtrennungen voneinander getrennt sind, kann ein Benutzer des Bedienelements erfühlen, welches der Eingabeelemente er augenblicklich berührt.

Dies erweist sich insbesondere dann als vorteilhaft, wenn nach einer Ausführungsform der Erfindung die Eingabeflächen statisch oder dynamisch einem Bedienpunkt der Anzeigevorrichtung zugeordnet sind. In anderen Worten ist es möglich, dass auf der Anzeigevorrichtung verschiedene auswählbare Funktionen dargestellt werden, wobei jede Funktion eindeutig ersichtlich einer der Eingabeflächen des Bedienelements zugeordnet ist. Damit ist ein Benutzer des Bedienelements in der Lage, aufgrund der erfühlbaren Eingabeflächen, ohne den Blick von der Straße zu wenden, genau jene Eingabefläche zu erfühlen und zu betätigen, welche augenblicklich einer gewünschten an der Anzeigevorrichtung dargestellten Funktion entspricht.

Nach einer weiteren Ausführungsform der Erfindung ist das Bedienelement zusätzlich zur dynamischen oder statischen Anzeige von Bildern im Bereich der Eingabeflächen ausgebildet. Somit kann die an der Anzeigevorrichtung dargestellte Funktion und einer Eingabefläche zugeordnete Funktion auch visuell auf der jeweiligen Eingabefläche dargestellt werden. Dies erweist sich insbesondere dann als vorteilhaft, wenn zum erstmaligen Erlernen des Systems ein Benutzer intuitiv an die Benutzung des Bedienelements herangeführt werden soll: Durch die duplizierte Darstellung der Funktionen auf der Anzeigevorrichtung und dem Bedienelement ist ein Benutzer damit schnell in der Lage, das grundsätzliche Funktionsprinzip des Bedienelements zu verstehen.

Nach einer weiteren Ausführungsform der Erfindung entspricht die räumliche Anordnung der Eingabeflächen relativ zur Bedienfläche der Koordinaten-Eingabevorrichtung auch der räumlichen Anordnung der Bedienpunkte relativ zur Anzeigefläche der Anzeigevorrichtung. In anderen Worten ist die relative Anordnung von Eingabefunktionen auf der Anzeigevorrichtung mit der relativen Anordnung der zugeordneten Eingabeflächen auf dem Bedienelement identisch. Damit kann ein Benutzer ohne Konzentrationsverlust und weiteres Nachdenken eine auf der Anzeigevorrichtung dargestellte Funktion einer entsprechenden Eingabefläche des Bedienelements direkt zuordnen. Ein Funktionselement rechts oben auf der Anzeigevorrichtung wird somit beispielsweise einer Eingabefläche in der rechten oberen Ecke des Bedienelements zugeordnet sein.

Nach einer weiteren Ausführungsform der Erfindung sind die Abtrennungen durch eine Gitteranordnung ausgebildet, wobei die Gitteranordnung auf der Koordinaten-Eingabevorrichtung fixierbar ist. Beispielsweise ist die Gitteranordnung auf die Koordinaten-Eingabevorrichtung aufsetzbar, um durch Schrauben oder durch Klipse an der Koordinaten-Eingabevorrichtung fixiert zu werden. Dies hat den Vorteil, dass für verschiedene Baureihen von Fahrzeugen je nach Komfortklasse visuell verschiedene Bedienelemente bereitgestellt werden können, die sich durch unterschiedlich hochwertige und einfache bzw. komplizierte Gitteranordnungen unterscheiden, wohingegen die dem Bedienelement als Basis zugrunde gelegte Koordinaten-Eingabevorrichtung für alle Kraftfahrzeugbaüreihen dieselbe ist.

Nach einer weiteren Ausführungsform der Erfindung weist das Bedienelement ferner ein mechanisch betätigbares Betätigungselement auf. Dieses Betätigungselement sollte so ausgestaltet sein, dass es haptisch fühlbar ist. Sinn und Zweck des Betätigungselementes ist, dass ein Benutzer nach Eingabe einer Funktion durch Berühren einer entsprechenden Eingabefläche der Koordinaten-Eingabevorrichtung diese Funktionsauswahl durch Betätigen des Betätigungselementes bestätigen muss. Ein ausschließlich einfaches Berühren der Koordinaten-Eingabevorrichtung zum Auslösen einer Bedienfunktion würde zu einer hohen Anzahl von Fehlbedienungen führen, da jegliche Art von gewollter bzw. ungewollter Berührung vom System als Funktionseingabe interpretiert werden würde. Durch die zusätzliche Verwendung eines mechanisch betätigbaren Betätigungselementes erhält ein Benutzer somit die Möglichkeit, eine von ihm gewählte Bedienfunktion zusätzlich noch zu bestätigen. Das mechanische Betätigen gibt dem Benutzer dabei noch ein zusätzliches haptisches Feedback, welches sich dabei vorzugsweise so äußert, dass das Betätigungselement seine räumliche Lage bei Betätigung verändert. Dies kann zum Beispiel durch die Ausgestaltung des Betätigungselementes als Druckknopf oder Drehrad realisiert werden.

Um die Aktivierung einer entsprechenden Bedienfunktion auf der Anzeigevorrichtung dem Benutzer zu signalisieren, bietet es sich beispielsweise an, nach Betätigung eines entsprechenden Eingabefeldes diese Betätigung an der Anzeigevorrichtung visuell anzuzeigen. Beispielsweise kann an der Anzeigevorrichtung eine ausgewählte Bedienfunktion farblich hervorgehoben werden, und/oder sie kann vergrößert dargestellt werden, und/oder mit einer bestimmten Hintergrundfarbe unterlegt werden und/oder einen Blinkvorgang durchführen. Wird daraufhin innerhalb einer vom System vorgegebenen Zeitspanne kein Bestätigungsvorgang durch Betätigen des Betätigungselementes durchgeführt, wird das Arizeigeelement in seinen nicht aktivierten Ursprungszustand zurückgesetzt.

Nach einer weiteren Ausführungsform der Erfindung weist die Koordinaten-Eingabevorrichtung eine Umrandung auf, wobei das Betätigungselement innerhalb der Umrandung angeordnet ist. Dies ist jedoch zur Umsetzung des obig genannten Konzepts nicht zwingend notwendig. Beispielsweise kann das Betätigungselement auch außerhalb der Koordinaten-Eingabevorrichtung angeordnet sein. Allerdings erweist sich die Anordnung des Bestätigungselementes innerhalb der Umrandung insbesondere deshalb als vorteilhaft, wenn das Betätigungselement zentriert zur Umrandung angeordnet ist. In diesem Fall verbinden vorzugsweise die Abtrennungen das Betätigungselement mit der Umrandung, so dass ein Benutzer des Bedienelementes nach einmaligen Auflegen seiner Hand auf den Bereich des Bedienelementes sämtliche Bedierifunktionen, d.h. Berühren der Eingabeflächen und Bestätigen durch Betätigen des Betätigungselementes, durchführen kann. Ein aufwendiges Suchen nach der Position des Betätigungselementes entfällt. In anderen Worten ist in diesem Fall das Betätigungselement Teil der Abtrennungen und der Umrandung. Handelt es sich bei der Kombination von Abtrennungen und Umrandung um einen Gitterrahmen, so kann dieser Gitterrahmen auch gleichzeitig das Betätigungselement aufweisen bzw. eine Vorrichtung zur Aufnahme des Betätigungselements aufweisen.

Nach einer weiteren Ausführungsform der Erfindung ist es möglich, dass ein solcher Gitterrahmen Kontaktelemente bzw. Detektionselemente für das Betätigungselement aufweist: Im Falle einer Ausbildung des Betätigungselements als Drehknopf können am Gitterrahmen oder allgemein an den Abtrennungen mechanische oder optische oder akustische Detektionselemente angeordnet sein, welche ein Drehen des Drehknopfes detektieren und über elektrische Kontakte entsprechende Signale an ein Steuergerät weiterleiten. Dasselbe gilt auch bei der Ausbildung als Druckknopf.

Nach einer weiteren Ausführungsform der Erfindung weist der Druckknopf eine Druckfläche auf, wobei die Druckfläche einen Vorsprung aufweist, wobei der Vorsprung auf der Seite der Druckfläche angeordnet ist, welche der Koordinaten-Eingabevorrichtung zugewandt ist, wobei der Vorsprung zur Berührung der Koordinaten-Eingabevorrichtung bei Betätigung des Druckknopfes ausgebildet ist. In anderen Worten handelt es sich bei dem Betätigungselement um einen mechanischen Druckknopf, bei dessen Betätigung eine Berührung der Koordinaten-Eingabevorrichtung unterhalb des Druckknopfes stattfindet. Damit kann auf weitere elektromechanische Komponenten zur Weiterleitung eines DruckknopfBetätigungssignals verzichtet werden. Dies ist insbesondere auch dann vorteilhaft, wenn wie bereits oben erwähnt die Abtrennungen durch eine Gitteranordnung ausgebildet sind, so dass vorzugsweise eine Kombination einer beliebigen Gitteranordnung mit einem Druckknopf, welcher an einer beliebigen Position der Gitteranordnung angeordnet ist, auf eine für eine Vielzahl von Kraftfahrzeugbaureihen vorkonfektionierte Koordinaten-Eingäbevorrichtung aufsetzbar ist. In diesem Fall kann die Ausgestaltung der Gitteranordnung und die räumliche Position des Druckknopfes vollkommen beliebig gewählt werden, da anschließend durch entsprechende Programmierung der Koordinaten-Eingabevorrichtung in Verbindung mit der Ansteuerung der Anzeigevorrichtung die entsprechende Eingabeflächenanordnung zugehörigen Punkten der Anzeigevorrichtung flexibel zugeordnet werden kann.

Nach einer Ausführungsform der Erfindung ist die Druckfläche elastisch ausgebildet. Damit erhält ein Benutzer ein haptisches Feedback, dass er den entsprechenden Druckknopf betätigt hat. Nach Betätigung des Druckknopfes, und damit gegebenenfalls wie oben erwähnt Aufdrucken des Vorsprungs auf die Koordinaten-Eingabevorrichtung, fährt die Druckfläche wieder selbständig in ihre Ausgangsposition zurück.

Nach einer weiteren Ausführungsform der Erfindung ist der Druckknopf gegen die Wirkung eines Federelements betätigbar. Auch hier erhält ein Benutzer ein haptisches Feedback, da ein gewisser Kraftaufwand zur Betätigung des Druckknopfes nötig ist. Anschließend fährt aufgrund der Wirkung des Federelements der Druckknopf wieder in seine Ausgangsposition zurück.

Nach einer weiteren Ausführungsform der Erfindung ist die Druckfläche lichtdurchlässig. Nach einer weiteren Ausführungsform der Erfindung ist die Druckfläche optisch transparent. In beiden Fällen ist es möglich, das unter dem Druckknopf befindliche Feld der Koordinaten-Eingabevorrichtung entweder zur Druckknopfbeleuchtung oder gar zur visuellen direkten Anzeige einer Druckknopffunktion auf der Druckfläche zu verwenden. Damit ist es auch in der Dunkelheit möglich, den Druckknopf visuell zu lokalisieren.

In einem weiteren Aspekt betrifft die Erfindung eine Mittelkonsole eines Kraftfahrzeugs mit einem erfindungsgemäßen Bedienelement. Nach einer Ausführungsform der Erfindung ist das Bedienelement in der Mittelkonsole versenkbar.

Nach einer weiteren Ausführungsform der Erfindung weist die Mittelkonsole eine Armauflage auf, wobei das Bedienelement in der Armauflage versenkbar ist. Nach einer weiteren Ausführungsform der Erfindung weist das Bedienelement eine verschiebbare Abdeckung auf, so dass bei Nichtbenötigung des Bedienelements dieses durch Überziehen mit der verschiebbaren Abdeckung geschützt wird.

Nach einer weiteren Ausführungsform der Erfindung ist das Bedienelement verschiebbar ausgebildet. Eine solche Verschiebbarkeit hat den Vorteil, dass die räumliche Lage des Bedienelements relativ zur Mittelkonsole individuell an die Größe des Benutzers des Bedienelements angepasst werden kann. Eine Anordnung zu weit vorne nahe der Gangschaltung würde große Benutzer ergonomisch benachteiligen, da diese typischerweise relativ weit hinten sitzen und somit beim bequemen Auflegen des Arms auf die Mittelkonsole nicht ohne weiteres ein nahe der Gangschaltung angeordnetes Bedienelement bequem bedienen können: Eine Anordnung zu weit weg von der Gangschaltung würde klein gewachsene Benutzer benachteiligen, da hier ein solcher Benutzer relativ nahe mit seinem Arm an der Gangschaltung positioniert sein wird. Durch die Verschiebbarkeit des Bedienelements in Längsrichtung der Mittelkonsole, aber auch gegebenenfalls in Querrichtung und senkrecht dazu, ermöglicht eine optimale ergonomische Anordnung des Bedienelements für jeden Benutzer.

In einem weiteren Aspekt betrifft die Erfindung ein Verfahren zum Betrieb eines Bedienelements für eine Anzeigevorrichtung in einem Transportmittel, wobei das Bedienelement von der Anzeigevorrichtung räumlich getrennt ist, wobei das Bedienelement eine Koordinaten-Eingabevorrichtung aufweist, wobei auf der Koordinaten-Eingabevorrichtung mehrere Eingabeflächen ausgebildet sind, wobei die Eingabeflächen durch haptisch fühlbare Abtrennungen räumlich voneinander getrennt sind, wobei das Verfahren die Schritte umfasst des Empfangens einer Benutzereingabe durch Detektion einer Berührung von zumindest einer der Eingabeflächen und dem Übermitteln der empfangenen Benutzereingabe an eine entsprechende Steuereinheit. Bei einer solchen Steuereinheit handelt es sich beispielsweise um eine Klimasteuerung, eine Navigationssteuerung, eine Multimediawiedergabe-Steuerung oder eine Steuerung zur Einstellung bzw Anzeige technischer Eigenschaften des Transportmittels wie z.B. Blinkverhalten der Fahrzeugblinklichter beim Öffnen oder Schließen des Fahrzeugs, Zeit bis zur nächsten Inspektion oder Ölwechsel.

Nach einer weiteren Ausführungsform der Erfindung weist die Koordinaten-Eingabevorrichtung ferner ein mechanisch betätigbares Betätigungselement auf, wobei das Verfahren ferner den Schritt des Empfangens einer Benutzerbestätigung durch Detektion einer Betätigung des Betätigungselements umfasst, wobei die Benutzereingabe erst nach Empfang der Benutzerbestätigung an die Steuereinheit übermittelt wird.

In einem weiteren Aspekt betrifft die Erfindung ein Computerprogrammprodukt mit von einem Computer ausführbaren Instruktionen zur Durchführung des Verfahrens zum Betrieb eines Bedienelements für eine Anzeigevorrichtung in einem Transportmittel.

Im Weiteren werden bevorzugte Ausführungsformen der Erfindung anhand der Zeichnungen näher erläutert.

Es zeigen:
- Figur 1: die Zuordnung von verschiedenen Bedienelementen zu Anzeigevorrichtungen, Anzeigevorrichtungen,
- Figur 2: eine schematische Ansicht eines Betätigungselementes,
- Figur 3: eine schematische Ansicht eines Bedienelements für eine Anzeigevorrichtung mit einer aufsetzbaren Gitteranordnung,
- Figur 4: verschiedene schematische Ansichten von Unterteilungen von Eingabeflächen eines Bedienelements für eine Anzeigevorrichtung,
- Figur 5: eine schematische Ansicht einer Mittelkonsole mit einem Bedienelement,
- Figur 6: eine schematische Ansicht einer Instrumententafel mit einer Anzeigevorrichtung sowie der Mittelkonsole mit einem Bedienelement,
- Figur 7: eine schematische Ansicht eines Bedienelements, weiches in der Mittelkonsole versenkbar ist bzw. welches eine verschiebbare Abdeckung aufweist.

Im Folgenden sind einander ähnliche Elemente mit denselben Bezugszeichen gekennzeichnet.

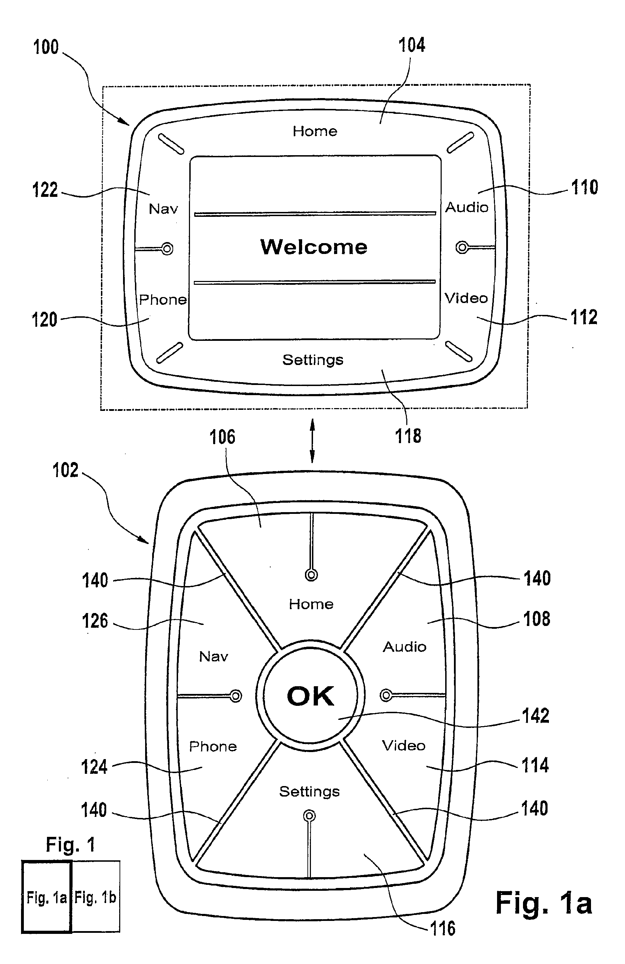

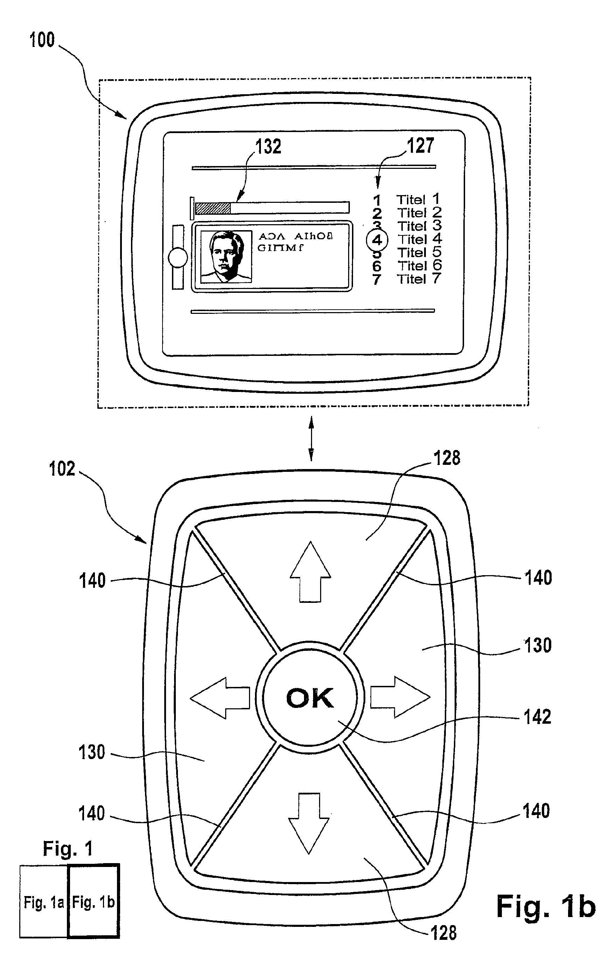

Die Figur 1 zeigt verschiedene Bedienelemente und entsprechend zugeordnete Anzeigevörrichtungen. In der Figur 1a ist eine Anzeigevorrichtung 100 für ein Kraftfahrzeug gezeigt, wobei diese Anzeigevorrichtung vorzugsweise in der Instrumententafel eines Kraftfahrzeugs direkt unterhalb der Windschutzscheibe angeordnet ist. Der Anzeigevorrichtung 100 zugeordnet ist ein Bedienelement 102, welches sich vorzugsweise in der Mittelkonsole bzw. an der Mittelkonsole, beispielsweise an der Armauflage, befindet, so dass ein Benutzer des Bedienelements ohne seinen Kopf von der Fahrtrichtung abzuwenden "blind" und intuitiv die Anzeigevorrichtung 100 steuern kann.

In der Figur 1a ist beispielhaft eine Basisanzeige einer Anzeigevorrichtung 100 illustriert, welche einen Willkommens-Bildschirm zeigt, welcher von mehreren Bedienpunkten für Bedienfunktionen umgeben ist. Beispielsweise weist der Willkommens-Bildschirm der Anzeigevorrichtung 100 verschiedene Bedienfunktionen auf, wie zum Beispiel Audio (110), Video (112), Einstellungen (Settings, 118), Telefon (Phone, 120) und Navigation (Nav, 122) und "Zurück" (Home, 104) auf. Jeder dieser Bedienfunktionen ist eine entsprechende Eingabefläche des Bedienelements 102 zugeordnet. Das Bedienelement weißt eine Koordinaten-Eingabevorrichtung auf, beispielsweise eine Touchscreen. Dabei ist beispielsweise der Eingabefunktion Audio (110) die Eingabefläche 108 des Bedienelements 102 zugeordnet. Weitere Zuordnungen sind die Zuordnung der Funktion Video (112) mit der Eingabefläche 114 des Bedienelements 100, die Funktion 118 (Einstellungen), welche der Eingabefläche 116 des Bedienelements 102 zugeordnet ist, sowie die Eingabeflächen 124, 126 und 106, welche entsprechend den Funktionen 120 und 122 (Navigation, Telefon) sowie 104 (Home) der Anzeigevorrichtung 100 zugeordnet sind.

Das Bedienelement 100 weist einen zentralen Druckknopf 142 auf, welcher den Zweck hat, eine über eine der Eingabeflächen 108, 114, 116, 124, 126 und 106 vorgenommene Eingabe zu bestätigen. Damit wird eine Eingabe nicht ausschließlich durch Berühren einer der entsprechenden Eingabeflächen, sondern erst nach mechanischem Betätigen des Druckknopfes 142 an eine entsprechende Steuereinheit als Steuerbefehl weitergegeben.

Es sei darauf hingewiesen, dass in der Figur 1a die räumliche Anordnung der Eingabeflächen relativ zur Bedienfläche der Touchscreen der räumlichen Anordnung der Bedienpunkte relativ zur Anzeigefläche der Anzeigevorrichtung entspricht. So befindet sich auf der Anzeigevorrichtung die Funktionsfläche Audio 110 rechts oben, was in dem Bedienelement 102 durch die Eingabefläche 108 reflektiert ist, welche sich ebenfalls rechts oben befindet. Unterhalb des Funktionsetementes Audio 110 befindet sich das Funktionselement Video 112 auf der Anzeigevorrichtung, was wiederum in dem Bedienelement 102 dadurch reflektiert ist, dass sich die Schaltfläche 114 für Video unterhalb der Schaltfläche für Audio 108 befindet.

In der Figur 1b ist gezeigt, wie die Anzeigevorrichtung dynamisch ihre Anzeige ändern kann, so dass nun die Anzeigevorrichtung einen anderen Bildinhalt aufweist. Das Bedienelement ist an diese Anzeige gekoppelt, so dass auch das Bedienelement dynamisch verschiedene unterschiedliche Funktionen auf den Eingabeflächen darstellen kann. Während es in Figur 1a darum ging, eine entsprechende Grundfunktion, wie zum Beispiel Audio oder Video, auszuwählen, wurde in der Figur 1b die Funktion Video ausgewählt, wodurch die Eingabeflächen nun weitere unterschiedliche Bedienfunktionen erhalten. So weist beispielsweise in der Figur 1b die Anzeigevorrichtung einen waagerechten Balken auf, welcher den aktuellen Abstand eines in der Anzeigevorrichtung 100 gezeigten Videofilmes wiedergibt. Des Weiteren weist die Anzeigevorrichtung 100 einen senkrechten Balken 127 auf, welcher den aktuell wiedergegebenen Titel des Videofilmes in der Anzeigevorrichtung 100 hervorhebt.

In der Figur 1b ist nun in dem Bedienelement 102 dem waagerechten Balken 132 die Eingabefläche 130 mit Pfeilen zugeordnet, mit welcher der aktuell gezeigte Film vor- und zurückgespult werden kann. Die Eingabeflächen 128 mit Pfeilen dienen dazu, um den vorigen oder einen nächsten Titel auszuwählen. In allen Fällen ist es auch hier wieder vorgegehen, eine entsprechende Eingabe durch Betätigung des Druckknopfes 142 zu quittieren.

Um nun in den Figuren 1a und 1b eine blinde Bedienung der Bedienelemente 102 zu ermöglichen, sind die auf der Touchscreen ausgebildeten Eingabeflächen durch haptisch fühlbare Abtrennungen 140 voneinander getrennt. Ebenfalls ist der Druckknopf 142 bzw. dessen Bedienung haptisch erfühlbar. Somit weiß ein Benutzer, wenn er einen Finger auf das Bedienelement 102 legt, auf welcher Eingabefläche des Bedienelements er sich augenblicklich befindet.

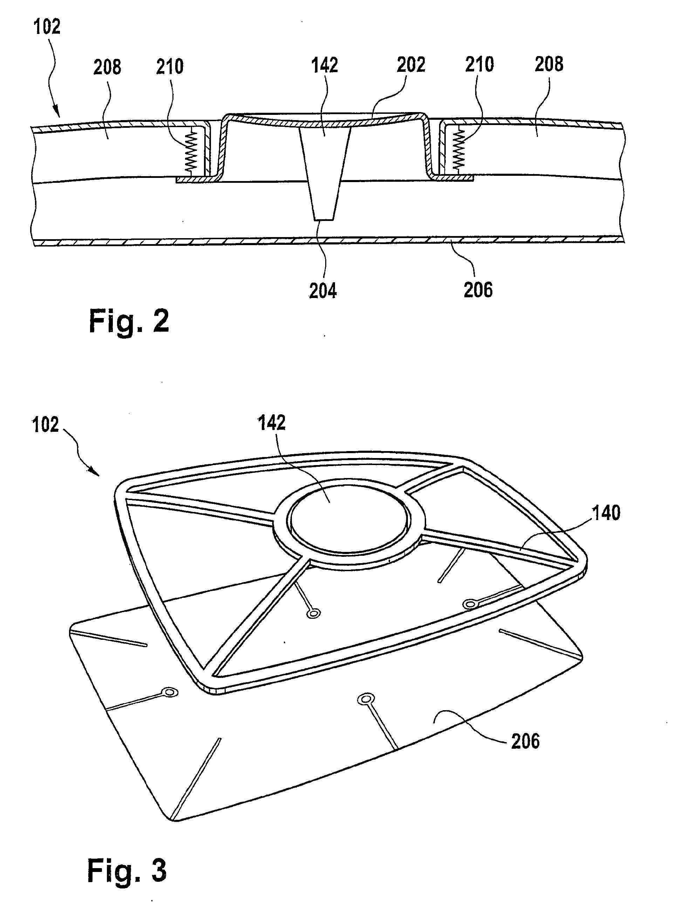

Die Figur 2 zeigt eine schematische Ansicht eines Druckkopfes 142 eines Bedienelements 102. Das Bedienelement 102 besteht aus einer Koordinaten-Eingabevorrichtung 206, z.B. einer Touchscreen oder eines Touchpads, sowie den Abtrennungen 208, welchen den Druckknopf 142 mit einem in der Figur 2 nicht gezeigten Rahmen der Koordinaten-Eingabevorrichtung verbinden. Der Druckknopf 142 weist eine Druckfläche 202 auf, wobei diese Druckfläche einen Vorsprung 204 aufweist, wobei der Vorsprung 204 auf der Seite der Druckfläche 202 angeordnet ist, welche der Koordinaten-Eingabevorrichtung 206 zugewandt ist. Durch Betätigen des Druckknopfes 142 berührt nun der Vorsprung 204 die Koordinaten-Eingabevorrichtung 206, welche diese Berührung als eine entsprechende Eingabe an dieser Position detektiert. Damit die Druckfläche 202 wieder in ihre ursprüngliche Position nach Beendigung des Betätigungsvorgangs zurückkehren kann, ist entweder die Druckfläche 202 als elastisches Material ausgebildet, oder es sind Federelemente 210 beispielsweise zwischen den Abtrennungen 208 und der Druckfläche 202 angeordnet, so dass der Druckknopf 142 gegen die Wirkung dieser Federelemente 210 betätigbar ist. Alternativ ist es auch möglich, die Kombination der elastischen Oberfläche und der Federelemente 210 zu verwenden.

Die Figur 3 zeigt eine weitere schematische Ansicht eines Bedienelementes 102 in perspektivischer Form. Deutlich sichtbar ist hier, dass die Abtrennungen 140 und optional der Druckknopf 142 als Gitteranordnung ausgebildet sind. Dieses Gitter von Abtrennungen und optionalem Druckknopf kann auf eine Koordinaten-Eingabevorrichtung-Oberfläche 206 aufgesetzt werden. Damit werden durch die Abtrennungen Eingabeflächen definiert, welche haptisch erfühlbar sind. Je nach Anwendungsbereich kann ein und dieselbe Koordinaten-Eingabevorrichtung 206 mit verschiedenen Gitteranordnungen betrieben werden, so dass die Gitteranordnungen an jeweilige Fahrzeugklassen angepasst werden können.

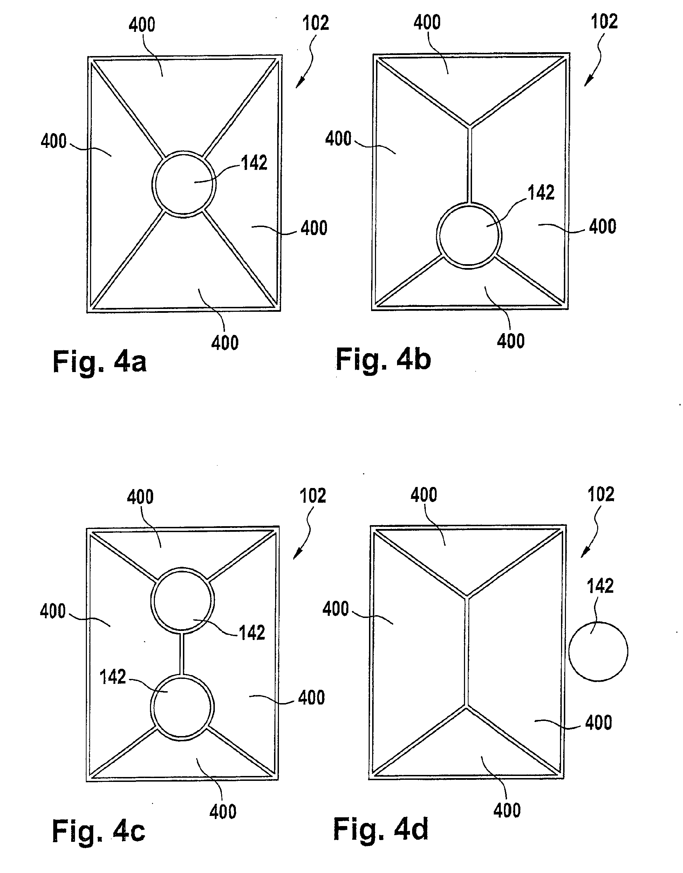

Die Figuren 4a, 4b, 4c und 4d zeigen verschiedene Anordnungen von Eingabeflächen von Bedienelementen 102. In der Figur 4a ist ein Betätigungselement 142 zentriert zu den Eingabeflächen 400 angeordnet. Hingegen ist in der Figur 4b dieses Betätigungselement 142 leicht nach unten verschoben, so dass sich hier die Möglichkeit ergibt, eine weitere V-förmige Eingabefläche auf der Koordinaten-Eingabevorrichtung anzuordnen.

In der Figur 4c sind zwei Betätigungselemente 142 gezeigt, die jeweils unterschiedliche Funktionen erfüllen können. So könnte beispielsweise eines der Betätigungselemente zur endgültigen Bestätigung "okay" einer Eingabe über die Eingabeflächen dienen, wohingegen es sich bei dem anderen Betätigungselement 142 beispielsweise um ein Drehrad handelt, mittels dessen beispielsweise bei einer Audiofunktion die Wiedergabetautstarke im Kraftfahrzeug variiert werden kann. Auch hier ist vorzugsweise vorgesehen, dass dem Drehregler verschiedene dynamisch zugeordnete Funktionen der Anzeigevorrichtung entsprechen. Dies könnte beispielsweise die Temperatureinstellung einer Klimafunktion sein, die Helligkeit einer Innenraumbeleuchtung, die Gebläsestärke einer Klimafunktion, aber auch das Blättern in verschiedenen alphabetisch angezeigten Verzeichnissen, beispielsweise zur Auswahl von Telefonteilnehmern oder der namentlichen Auswahl von Musikinterpreten bei einer Audiofunktion.

In der Figur 4d ist eine weitere alternative Ausführungsform eines Bedienelementes gezeigt, bei welchem sich das Betätigungselement 142 außerhalb der Eingabeflächen 400 befindet.

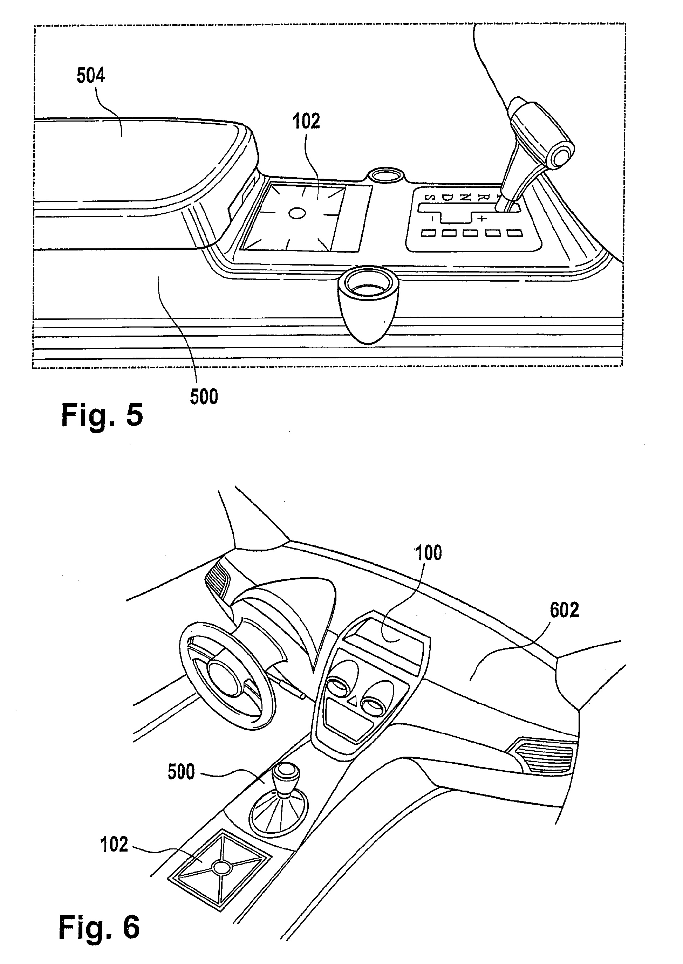

Die Figur 5 zeigt eine Mittelkonsole 500 eines Kraftfahrzeugs. Die Mittelkonsole weist u.a. ein Bedienelement 102 auf, so dass ein Benutzer des Bedienelements, beispielsweise ein Kraftfahrzeugführer, durch bequemes Auflegen seines Arms auf eine Armaüflage 504 mit seinen Fingern das Bedienelement 102 bedienen kann. Da sich das Bedienelement, wie in der Figur 5 gezeigt, zwischen Armauflage und Gangschaltung befindet, ist ein Kraftfahrzeugführer jederzeit in der Lage, durch eine kleine Handbewegung zur Gangschaltung zu greifen, um somit hier in rascher Weise einen entsprechenden Schaltvorgang durchzuführen.

Die Figur 6 zeigt eine Ansicht eines Cockpits eines Kraftfahrzeugs, welches eine Instrumententafel 602 sowie die Mittelkonsole 500 umfasst. In die Instrumententafel 602 ist in der Figur 6 die Anzeigevorrichtung 100 eingelassen, so dass ein Kraftfahrzeugführer ohne wesentlich seinen Blick von der Fahrtrichtung abzulenken, entsprechende auf der Anzeigevorrichtung 100 visuell dargestellte Elemente erfassen kann. Alternativ ist es auch möglich, anstatt einer Anzeigevorrichtung in Form eines Displays, wie beispielsweise eines LCD-Bildschirms, eine Anzeigeprojektion auf die Windschutzscheibe in Form eines Headup-Displays (HUD) zu realisieren. In diesem Fall werden für den Fahrer relevante Daten visuell in das Blickfeld des Fahrzeugführers eingeblendet.

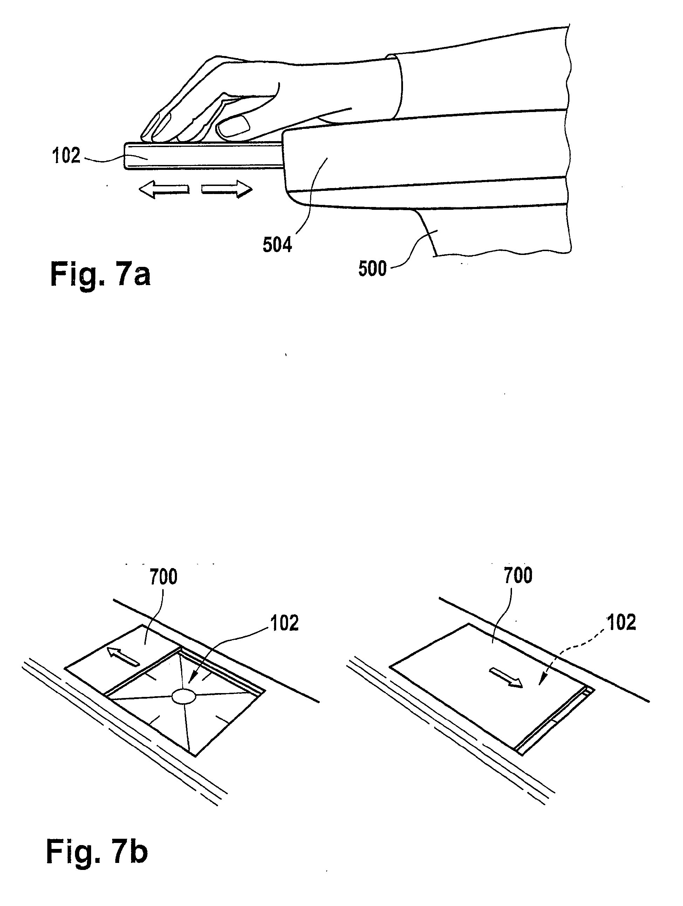

Die Figuren 7a und 7b zeigen verschiedene Möglichkeiten, wie ein Bedienelement 102 in eine Mittelkonsole 500 eines Kraftfahrzeugs integriert werden kann. Beispielsweise weist die Mittelkonsole, wie bereits bezüglich der Figur 5 diskutiert, eine Armauflage 504 auf, aus welcher, wie in der Figur 7a gezeigt, das Bedienelement 102 heraussteht. Das Bedienelement 102 kann nun wie in der Figur 7a gezeigt, in der Armauflage 504 versenkt werden. Dies kann entweder rein mechanisch geschehen, in dem beispielsweise eine Push-Pull-Funktionalität implementiert wird, oder dies kann elektromotorisch geschehen, indem ein Benutzer durch Betätigung einer entsprechenden Funktion an der Mittelkonsole bzw. der Instrumententafel ein Ein- und Ausfahren des Bedienelementes 102 steuert.

Eine Alternative zum Ein- und Ausfahren des Bedienelements 102 ist in der Figur 7b gezeigt, bei welcher das Bedienelement 102 eine Abdeckung 700 aufweist. Diese Abdeckung 700 ist entweder manuell oder elektromotorisch gesteuert über das Bedienelement 102 verschiebbar, um so das Bedienelement 102 vor Betätigung, aber auch vor äußeren Umwelteinwirkungen wie Schmutz zu schützen.

### Bezugszeichenliste

- 100: Anzeigevorrichtung
- 102: Bedienelement
- 104: Funktion
- 106: Eingabefläche
- 108: Eingabefläche
- 110: Funktion
- 112: Funktion
- 114: Eingabefläche
- 116: Eingabefläche
- 118: Funktion
- 120: Funktion
- 122: Funktion
- 124: Eingabefläche
- 126: Eingabefläche
- 127: Funktion
- 128: Eingabefläche
- 130: Eingabefläche
- 132: Funktion
- 140: Streben
- 142: Betätigungselement
- 202: Druckfläche
- 204: Vorsprung
- 206: Koordinaten-Eingabevorrichtung
- 208: Abtrennung
- 210: Federelement
- 400: Eingabefläche
- 500: Mittelkonsole
- 504: Armauflage
- 602: Instrumententafel
- 700: Abdeckung

## Patentansprüche

1. Bedienelement (102) für eine Anzeigevorrichtung (100) in einem Transportmittel, wobei das Bedienelement (102) von der Anzeigevorrichtung (100) räumlich getrennt ist, wobei das Bedienelement (102) eine einzige berührungsempfindliche Koordinaten-Eingabevorrichtung (206) aufweist, wobei auf der Koordinaten-Eingabevorrichtung (206) mehrere Eingabeflächen (106; 108; 114; 116; 124; 126; 400) ausgebildet sind, wobei die Eingabeflächen durch haptisch fühlbare Abtrennungen (140) räumlich voneinander getrennt sind, **dadurch gekennzeichnet daß** das Bedienelement ferner ein mechanisch betätigbares Betätigungselement (142) aufweist.

2. Bedienelement (102) nach Anspruch 1, wobei das Bedienelement (102) zur dynamischen oder statischen Anzeige von Bildern im Bereich der Eingabeflächen ausgebildet ist.

3. Bedienelement (102) nach einem der vorigen Ansprüche, wobei die Eingabeflächen statisch oder dynamisch einem Bedienpunkt der Anzeigevorrichtung (100) zugeordnet sind.

4. Bedienelement (102) nach Anspruch 3, wobei die räumliche Anordnung der Eingabeflächen (106; 108; 114; 116; 124; 126; 400) relativ zur Bedienfläche der Koordinaten-Eingabevorrichtung (206) der räumlichen Anordnung der Bedienpunkte (104; 110; 112; 120; 122) relativ zur Anzeigefläche der Anzeigevorrichtung (100) entspricht.

5. Bedienelement (102) nach einem der vorigen Ansprüche, wobei die Koordinaten-Eingabevorrichtung (206) eine Umrandung aufweist, wobei das Betätigungselement (142) innerhalb der Umrandung angeordnet ist.

6. Bedienelement (102) nach einem der vorigen Ansprüche, wobei das Betätigungselement (142) zentriert zur Umrandung angeordnet ist.

7. Bedienelement (102) nach einem der vorigen Ansprüche, wobei die Abtrennungen (140) das Betätigungselement (142) mit der Umrandung verbinden.

8. Bedienelement (102) nach einem der vorigen Ansprüche, wobei es sich bei dem Betätigungselement (142) um einen Druckknopf und/oder ein Drehrad handelt, wobei der Druckknopf eine Druckfläche (202) aufweist, wobei die Druckfläche einen Vorsprung (204) aufweist, wobei der Vorsprung auf der Seite der Druckfläche angeordnet ist, welche der Koordinaten-Eingabevorrichtung (206) zugewandt ist, wobei der Vorsprung (204) zur Berührung der Koordinaten-Eingabevorrichtung (206) bei Betätigung des Druckknopfes ausgebildet ist.

9. Mittelkonsole (500) eines Kraftfahrzeugs mit einem Bedienelement (102) nach einem der vorigen Ansprüche.

10. Mittelkonsole (500) nach Anspruch 9, ferner mit einer verschiebbaren Abdeckung (700) für das Bedienelement (102).

11. Mittelkonsole (500) nach Anspruch 10, wobei das Bedienelement (102) in der Mittelkonsole (500) versenkbar ist.

12. Mittelkonsole (500) nach Anspruch 11, wobei die Mittelkonsole (500) eine Armauflage (504) aufweist, wobei das Bedienelement (102) in der Armauflage (504) versenkbar ist.

13. Mittelkonsole (500) nach einem der vorigen Ansprüche 9 bis 12, wobei das Bedienelement verschiebbar ausgebildet ist.

14. Verfahren zum Betrieb eines Bedienelements (102) für eine Anzeigevorrichtung (100) in einem Transportmittel, wobei das Bedienelement (102) von der Anzeigevorrichtung (100) räumlich getrennt ist, wobei das Bedienelement (102) eine einzige berührungsempfindliche Koordinaten-Eingabevorrichtung (206) aufweist, wobei auf der Koordinaten-Eingabevorrichtung (206) mehrere Eingabeflächen (106; 108; 114; 116; 124; 126; 400) ausgebildet sind, wobei die Eingabeflächen durch haptisch fühlbare Abtrennungen (140) räumlich voneinander getrennt sind, wobei die Koordinaten-Eingabevorrichtung (206) ferner ein mechanisch betätigbares Betätigungselement (142) aufweist, wobei das Verfahren umfasst:
- Empfang einer Benutzereingabe durch Detektion einer Berührung von zumindest einer der Eingabeflächen,
- Übermitteln der Benutzereingabe an eine Steuereinheit,
- Empfangens einer Benutzerbestätigung durch Detektion einer Betätigung des Betätigungselements (142),
wobei die Benutzereingabe erst nach Empfang der Benutzerbestätigung an die Steuereinheit übermittelt wird.

15. Computerprogrammprodukt mit von einem Computer ausführbaren Instruktionen zur Durchführung der Verfahrensschritte des Verfahrens gemäß Anspruch 14.

## Claims

1. An operating element (102) for a display device (100) in a transport means, wherein the operating element (102) is spatially separated from the display device (100), wherein the operating element (102) has a single touch-sensitive coordinate input device (206), wherein a plurality of input areas (106; 108; 114; 116; 124; 126; 400) are formed on the coordinate input device (206), wherein the input areas are spatially separated from one another by haptically perceptible partitions (140), **characterised in that** the operating element further has a mechanically actuatable actuation element (142).

2. The operating element (102) according to Claim 1, wherein the operating element (102) is designed for dynamic or static display of images in the region of the input areas.

3. The operating element (102) according to one of the preceding claims, wherein the input areas are associated statically or dynamically with an operating point of the display device (100).

4. The operating element (102) according to Claim 3, wherein the spatial arrangement of the input areas (106; 108; 114; 116; 124; 126; 400) relative to the operating area of the coordinate input device (206) corresponds to the spatial arrangement of the operating points (104; 110; 112; 120; 122) relative to the display area of the display device (100).

5. The operating element (102) according to one of the preceding claims, wherein the coordinate input device (206) has a border, wherein the actuation element (142) is arranged within the border.

6. The operating element (102) according to one of the preceding claims, wherein the actuation element (142) is arranged in a manner centred with respect to the border.

7. The operating element (102) according to one of the preceding claims, wherein the partitions (140) connect the actuation element (142) to the border.

8. The operating element (102) according to one of the preceding claims, wherein the actuation element (142) is a push button and/or a rotary knob, wherein the push button has a push surface (202), wherein the push surface has a protrusion (204), wherein the protrusion is arranged on the side of the push surface facing the coordinate input device (206), wherein the protrusion (204) is designed to contact the coordinate input device (206) in the event of actuation of the push button.

9. A centre console (500) of a motor vehicle, having an operating element (102) according to one of the preceding claims.

10. The centre console (500) according to Claim 9, further having a displaceable cover (700) for the operating element (102).

11. The centre console (500) according to Claim 10, wherein the operating element (102) can be countersunk in the centre console (500).

12. The centre console (500) according to Claim 11, wherein the centre console (500) has an armrest (504), wherein the operating element (102) is countersunk in the armrest (504).

13. The centre console (500) according to one of preceding Claims 9 to 12, wherein the operating element is displaceable.

14. A method for operating an operating element (102) for a display device (100) in a transport means, wherein the operating element (102) is spatially separated from the display device (100), wherein the operating element (102) has a single touch-sensitive coordinate input device (206), wherein a plurality of input areas (106; 108; 114; 116; 124; 126; 400) are formed on the coordinate input device (206), wherein the input areas are spatially separated from one another by haptically perceptible partitions (140), wherein the coordinate input device (206) further has a mechanically actuatable actuation element (142), wherein the method comprises the following steps:
- receiving a user input by detection of a touching of at least one of the input areas,
- transmitting the user input to a control unit,
- receiving a user confirmation by detection of an actuation of the actuation element (142),
wherein the user input is only transmitted to the control unit after receipt of the user confirmation.

15. A computer program product having instructions, which can be implemented by a computer, for carrying out the method steps of the method according to Claim 14.

## Revendications

1. Élément de commande (102) pour un dispositif d'affichage (100) dans un moyen de transport, dans lequel l'élément de commande (102) est spatialement séparé du dispositif d'affichage (100), dans lequel l'élément de commande (102) comporte un seul dispositif de saisie de coordonnées (206) sensible au toucher, dans lequel plusieurs surfaces de saisie (106 ; 108 ; 114 ; 116 ; 124 ; 126 ; 400) sont formées sur le dispositif de saisie de coordonnées (206), dans lequel les surfaces de saisie sont séparées les unes des autres par des séparations (140) perceptibles au toucher, **caractérisé en ce que** l'élément de commande comporte en outre un élément d'actionnement (142) actionnable mécaniquement.

2. Élément de commande (102) selon la revendication 1, dans lequel l'élément de commande (102) est conçu pour l'affichage dynamique ou statique d'images dans la région des surfaces de saisie.

3. Élément de commande (102) selon l'une des revendications précédentes, dans lequel les surfaces de saisie sont attribuées de façon statique ou dynamique à un point de commande du dispositif d'affichage (100).

4. Élément de commande (102) selon la revendication 3, dans lequel l'agencement spatial des surfaces de saisie (106 ; 108 ; 114 ; 116 ; 124 ; 126 ; 400) par rapport à la surface de commande du dispositif de saisie de coordonnées (206) correspond à l'agencement spatial des points de commande (104 ; 110 ; 112 ; 120 ; 122) par rapport à la surface d'affichage du dispositif d'affichage (100).

5. Élément de commande (102) selon l'une des revendications précédentes, dans lequel le dispositif de saisie de coordonnées (206) comporte une bordure, dans lequel l'élément d'actionnement (142) est agencé à l'intérieur de la bordure.

6. Élément de commande (102) selon l'une des revendications précédentes, dans lequel l'élément d'actionnement (142) est agencé de façon centrée par rapport à la bordure.

7. Élément de commande (102) selon l'une des revendications précédentes, dans lequel les séparations (140) relient l'élément d'actionnement (142) à la bordure.

8. Élément de commande (102) selon l'une des revendications précédentes, dans lequel l'élément d'actionnement (142) est un bouton à pression et/ou un bouton rotatif, dans lequel le bouton à pression comporte une surface de pression (202), dans lequel la surface de pression comporte une saillie (204), dans lequel la saillie est agencée du côté de la surface de pression (206) tourné vers le dispositif de saisie de coordonnées (206), dans lequel la saillie (204) est conçue pour toucher le dispositif de saisie de coordonnées (206) lors de l'actionnement du bouton à pression.

9. Console centrale (500) d'un véhicule automobile avec un élément de commande (102) selon l'une des revendications précédentes.

10. Console centrale (500) selon la revendication 9, comprenant en outre un couvercle coulissant (700) pour l'élément de commande (102).

11. Console centrale (500) selon la revendication 10, dans laquelle l'élément de commande (102) peut être abaissé dans la console centrale (500).

12. Console centrale (500) selon la revendication 11, dans laquelle la console centrale (500) comporte un accoudoir (504), dans lequel l'élément de commande (102) peut être abaissé dans l'accoudoir (504).

13. Console centrale (500) selon l'une des revendications 9 à 12, dans laquelle l'élément de commande est conçu déplaçable.

14. Procédé pour le fonctionnement d'un élément de commande (102) pour un dispositif d'affichage (100) dans un moyen de transport, dans lequel l'élément de commande (102) est spatialement séparé du dispositif d'affichage (100), dans lequel l'élément de commande (102) comporte un seul dispositif de saisie de coordonnées (206) sensible au toucher, dans lequel plusieurs surfaces de saisie 106 ; 108 ; 114 ; 116 ; 124 ; 126 ; 400) sont formées sur le dispositif de saisie de coordonnées (206), dans lequel les surfaces de saisie sont spatialement séparées les unes des autres par des séparations (140) perceptibles au toucher, dans lequel le dispositif de saisie de coordonnées (206) comporte en outre un élément d'actionnement (142) actionnable mécaniquement, le procédé comprenant :
- la réception d'une entrée d'utilisateur par la détection d'un effleurement d'au moins l'une des surfaces de saisie,
- la transmission de l'entrée d'utilisateur à une unité de commande,
- la réception d'une confirmation d'utilisateur par la détection d'un actionnement de l'élément d'actionnement (142),
dans lequel l'entrée d'utilisateur n'est transmise à l'unité de commande qu'après réception de la confirmation d'utilisateur.

15. Produit de programme informatique avec des instructions exécutables par ordinateur, pour l'exécution des étapes de procédé du procédé selon la revendication 14.
